(19) Europäisches Patentamt
European Patent Office
Office européen des brevets

(11) EP 0 731 649 B1

(12) EUROPÄISCHE PATENTSCHRIFT

(45) Veröffentlichungstag und Bekanntmachung des Hinweises auf die Patenterteilung: **01.07.1998 Patentblatt 1998/27**

(21) Anmeldenummer: **95901267.5**

(22) Anmeldetag: **06.12.1994**

(51) Int. Cl.[6]: **A23P 1/08**, A21D 13/00, B65D 65/46

(86) Internationale Anmeldenummer: **PCT/AT94/00187**

(87) Internationale Veröffentlichungsnummer: **WO 95/15698 (15.06.1995 Gazette 1995/25)**

# (54) VERFAHREN ZUR HERSTELLUNG VON VERROTTBAREN, DÜNNWANDIGEN FORMKÖRPERN AUF STÄRKEBASIS

PROCESS FOR PRODUCING DECOMPOSABLE THIN-WALLED MOLDED ARTICLES BASED ON STARCH

PROCEDE DE FABRICATION DE CORPS PROFILES A PAROIS MINCES, DEGRADABLES, A BASE D'AMIDON

(84) Benannte Vertragsstaaten: **AT BE CH DE DK ES FR GB GR IE IT LI LU MC NL PT SE**

(30) Priorität: **06.12.1993 AT 2466/93**

(43) Veröffentlichungstag der Anmeldung: **18.09.1996 Patentblatt 1996/38**

(73) Patentinhaber:
**FRANZ HAAS WAFFELMASCHINEN INDUSTRIEGESELLSCHAFT M.B.H.**
**1210 Wien (AT)**

(72) Erfinder:
- **TIEFENBACHER, Karl**
  **A-1170 Wien (AT)**
- **HAAS, Franz, Sen.**
  **A-1210 Wien (AT)**
- **HAAS, Johann**
  **A-3400 Klosterneuburg (AT)**

(74) Vertreter: **Berger, Erhard, Dr.**
**Siebensterngasse 39**
**1071 Wien (AT)**

(56) Entgegenhaltungen:
**EP-A- 0 376 201**
**EP-A- 0 608 031**
**WO-A-93/19125**
**US-A- 5 320 669**
**EP-A- 0 546 539**
**WO-A-93/08014**
**FR-A- 2 292 005**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Xerox (UK) Business Services
2.16.3/3.4

## Beschreibung

Die vorliegende Erfindung betrifft ein Verfahren zur Herstellung von verrottbaren, dünnwandigen Formkörpern, wie z.B. Bechern, Tellern, Fast-Food-Verpackungen, Trays, ebenen Blättern u.dgl., durch Aufbringen einer Backmasse auf Stärkebasis auf den unteren Formte einer mehrteiligen, vorzugsweise zweiteiligen Form, wobei man, um ein zähes, festes, hohe mechanische Stabilität aufweisendes Produkt zu erhalten

1) eine aus folgenden Ingredienzien bereitete, im wesentlichen fettfreie Backmasse einsetzt:

a) 42,0 bis 60,0 Gew.-% vorzugsweise 45,0 bis 56,0 Gew.-% Wasser;
b) 36,0 bis 56,5 Gew.-%, vorzugsweise 38,0 bis 52,0 Gew.-% eines Stärkeproduktes;
c) als Trennmittel 0,04 bis 11 Gew.-%, vorzugsweise 0,2 bis 4,5 Gew.-% einer oder mehrerer mittel- oder langkettiger, gegebenenfalls substituierter Fettsäuren und/oder deren Salze und/oder deren Säurederivate, z.B. Säureamide - gegebenenfalls können neben diesen Verbindungen oder als teilweiser, in Einzelfällen auch als vollständiger Ersatz derselben 0,5 bis 6,5 Gew.-%, vorzugsweise 0,1 bis 4,2 Gew.-% Polymethylhydrogensiloxane eingesetzt werden, wobei im Falle des Einsatzes beider Verbindungsgruppen bei hohen Konzentrationen an Fettsäuren bzw. deren Verbindungen die Konzentration an Polymethylhydrogensiloxanen in der Regel 3 Gew.-% nicht überschreiten soll und
gegebenenfalls Verdickungsmittel, wie Quellstärke, vorverkleisterte Stärke od. Backabfall, und/oder Guar-Mehl, Pektin, Johannisbrotkernmehl, Carboxymethylcellulose und/oder Gummi arabicum;
Faserstoffe, wie cellulosereiche Rohstoffe, pflanzliche Rohstoffe, Fasern aus Kunststoff, Glas, Metall und Kohlenstoff;
nicht faserförmige Füllstoffe, wie Calciumcarbonat, Kohle, Talkum, Titandioxid, Kieselgel, Aluminiumoxid, Schellack, Sojaeiweiß, pulv., Weizenkleber, pulv., Hühnereiweiß, pulv., Casein, pulv. und Caseinat, pulv.;
Farbstoffe;
Konservierungsmittel, und
Antioxidantien;

2) die die Form ausfüllende Backmasse ausbackt, und
3) das erhaltene Produkt durch Konditionieren auf einen Feuchtigkeitsgehalt von 6 Gew.-% bis 22 Gew.-% einstellt.

Ein solches Verfahren ist in der EP-B1 513 106 beschrieben. Als Stärkeprodukte werden dort verschiedene Stärken und/oder Mehl oder Mehlgemische eingesetzt.

Die zur Herstellung der Formkörper verwendete Stärkeart bestimmt zusammen mit der Mitverwendung von Zuschlagstoffen und den Herstellungsbedingungen die Beschaffenheit (Gewicht, Dichte, mechanische Eigenschaften u. dgl.) des erhaltenen Endproduktes.

Es hat sich nun überraschenderweise gezeigt, daß die Formkörper eine signifikante Stabiltätserhöhung zeigen, wenn neben oder anstelle von Stärke mindestens eine modifizierte Stärke ausgewählt aus der Gruppe bestehend aus: mit organischen Säuren oder mit Phosphorsäure veresterte Stärke, veretherte Stärke, vernetzte Stärke und durch ionische Wechselwirkung modifizierbare Stärke eingesetzt wird.

Während die bisher in den bekannten Formulierungen verwendeten Stärkederivate primär aufgrund ihrer verdikkenden Wirkung eingesetzt wurden, z.B. vorverkleisterte Stärken und dadurch eine Sedimentation einzelner Komponenten der Backmasse hintengehalten wurde, ist durch die erfindungsgemäßen Zusätze eine wirkung auf die Strukturbildung und deren Festigkeit zu erkennen.

Stärke, bei den wichtigsten nativen Stärken bestehend aus Amylose (17-31%) und Amylopektin (69-83%), ist in körniger Überstruktur organisiert. Ein Korn enthält eine große Zahl von Amylose- und Amylopektinmolekülen hoher Kettenlänge (größer 1000 Glucoseeinheiten). Pro Glucoseeinheit sind 3 OH-Gruppen in der Amylose für Substitutionen verfügbar, bei Amylopektin ebenso, ausgenommen die wenigen Verzweigungsstellen, hier 2 freie OH.

Stärkederivate werden durch einige wichtige Kennzahlen charakterisiert:
DS (degree of substitution):
durchschnittliche Zahl der substituierten Stellen pro Glucoseeinheit
Maximum = 3,
häufig verwendet unter 0,001 bis 0,2,d.h.
unter 1 bis 200 substituierte Stellen auf 1000 Glucosebausteine
% Substitution (Gewichts% Substituenten in gesamter Trockensubstanz):
Die Angaben in DS oder % Substitutionen erfolgt je nach Derivatisierungsmethode und Bestimmbarkeit.

Die genannten Stärkederivate (veresterte Stärke, veretherte Stärke und vernetzte Stärke) sind äußerlich (mikroskopisch) unveränderte Stärkekörner. Sie müssen zwei aufeinander abgestimmte Wirkungen zeigen

1. leichtere Quellung des Korns durch monofunktionelle Veresterung, Veretherung
d.h. Wasseraufnahme und Verkleisterung bei tieferen Temperaturen. Folge: schnellere, vollständigere Verkleisterung während des Backvorganges, dadurch bessere Ausnützung der "Bindungskraft" der Stärke.

2. Vernetzung der Kornstrukturen
begrenzt die Quellung, Wasser wird aufgenommen und festgehalten, aber kein unbegrenztes Quellen und in der Folge Aufplatzen des Korns. Als Folge eine dichtere und stabilere Struktur.

1a) Veresterung mit organischen Säuren:

$$\text{Stärke} - OH \rightarrow \text{Stärke} - O\overset{\overset{O}{\|}}{C} - R$$

R = $CH_3$ Acetylierung, DS bis 0,12
R = $CH_2$-$CH_2$-$COOR_1$ Succinylierung, max. 4% Succinanhydrid $R_1$ = H, Na oder anderes Gegenion je nach pH Wert und eingesetzten Salzen/Basen
R = $CHR_2$-$CHR_3$ - $COOR_1$, Alkenylsuccinylierung, max. 3% Alkenylsuccinanhydrid
$R_2$ = H und $R_3$ = Alkenyl oder
$R_2$ = Alkenyl und $R_3$ = H

Alkenyl = z.B. Octenyl, Decenyl

Beispiel:

| | | Verkleisterungstemperatur |
|---|---|---|
| Maisstärke | | 62-72°C |
| Acetylierung mit DS | 0,04 | 56-63°C |
| | 0,08 | 48-56°C |
| (R = $COCH_3$) | 0,12 | 41-51°C |
| (Leach et al, Cer. Chem 36,564,1959) | | |

Beispiel: Bernsteinsäureester

| % Substitution | Verkleisterungstemp. Grad C | Quellung bei Raumtemp. ml/25g |
|---|---|---|
| 0 | 72 | 34 |
| 1 | 67 | 35 |
| 2 | 65 | 40 |
| 3 | 63 | 47 |
| 4 | 58 | 49 |

(O.B. Wurzburg, Modified starches, CRC Press, 1986, p. 133)
Die Ester sind im alkalischen pH-Bereich nicht stabil, daher wird eine Veretherung bevorzugt.

1b) Monofunktionelle Veresterung mit Phosphorsäure:

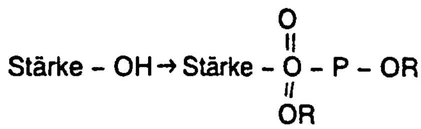

R = H, Na oder andere Gegenionen je nach pH-Wert und eingesetzten Salzen/Basen
DS = 0,005-0,1, bevorzugt unter 0,05, max. 0,5% P im Derivat;
ab ca. DS 0,07 Verkleisterung bei Raumtemperatur.

1c) Veretherung:

$$\text{Stärke - OH} \rightarrow \text{Stärke - O - R}$$

R = $CH_2$-$CH_2$-OH Hydroxyethylether
R = $(CH_2)_3$-OH Hydroxypropylether
DS = 0,01-0,2, bevorzugt 0,02 bis 0,1

Die beschriebenen Substituenteneffekte treffen im Prinzip auf alle wichtigen Stärkearten zu (Mais, Kartoffel, Tapioka, Weizen), sowie auf kationische Stärken.

Der Einfluß der Vernetzung ist im besonderen bei Kartoffelstärke von Bedeutung, da diese extreme Quellung und Auflösung der Kornstruktur zeigt.

| | Wasseraufnahme g/g Stärke | Mittl. Aggregatvolumen ml/g | Packungsdichte |
|---|---|---|---|
| Mais | 15,1 | 35,5 | 0,45 |
| Kartoffel | 115,0 | 405,0 | 0,24 |
| Tapioka | 21,9 | 59,5 | 0,38 |
| (Evans, Haisman, J. Texture Studies 10, 347, 1979) | | | |

2) Vernetzung:

1. Phosphatvernetzung mit Natriumtrimetaphosphat oder Phosphoroxichlorid

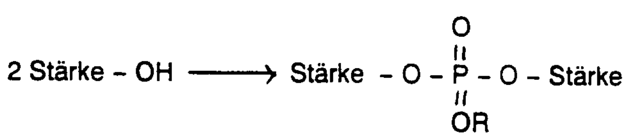

R = H, Na oder anderes Gegenion je nach Bedingungen
DS = $1,10^{-4}$ bis $1,10^{-2}$, bevorzugt $5,10^{-4}$ bis $5,10^{-3}$, max. Phosphorgehalt 0,14% (0,04% aus Vernetzung).

2. Dicarbonsäurevernetzung

$$2\ \text{Stärke - OH} \rightarrow \text{Stärke - O - CO - }(CH_2)_n\text{ - CO - O - Stärke}$$

z.B. n = 4: Adipinsäurevernetzungen, max. 0,12% Adipinsäureanhydrid

3. Glycerinvernetzung

$$2\ \text{Stärke - OH} \rightarrow \text{Stärke - O - }CH_2\text{ - CHOH - }CH_2\text{ - O - Stärke}$$

max. 0,3% Epichlorhydrin bzw. 0,6% Acrolein

Die Bedeutung der Vernetzung wird bei einer Betrachtung der Vorgänge bei zunehmender Quellung und Verkleisterung deutlich.

Die bis zu etwa 50°C reversible Wasseraufnahme und Quellung der Stärkekörner nimmt bei weiterem Temperaturanstieg zu. Teilkristalline Strukturen werden aufgelöst und die Viskosität steigt stark an, da die immer mehr aufquellenden Stärkekörner das freie Wasser zunehmend binden. Teile der Stärke, speziell die Amylose treten aus und wirken als Kleber. Bei weitergehender Quellung kommt es zu einer Zerstörung der gequollenen Körner und zu einem deutlichen Viskositätsabfall, speziell bei Kartoffelstärke.

Diese übermäßige Quellung soll durch eine geringfügige Strukturvernetzung verhindert werden.

Das erfindungsgemäße bevorzugte Derivat ist:

1. ein Stärkeether (Hydroxypropylether): dadurch Quellung und Verkleisterung bei tieferen Temperaturen und gleichzeitig

2. eine vernetzte Stärke (Phosphat-Esterbindungen): begrenzt und verlangsamt die Quellung, Wasser besser gebunden, kein Aufplatzen der Kornstruktur.

Andere Derivate mit ähnlicher Wirkung sind:

1) Stärkeester
z.B. mit a) Essigsäure, b) Bernsteinsäure, c) Phosphorsäure, bzw. d) Alkenylbernsteinsäure; dadurch frühere Quellung und Verkleisterung.

2 a) Vernetzung über Dicarbonsäure-, Phosphat-, Glyceringruppen zur Begrenzung der Quellung und des Aufplatzens

2 b,c) keine chemische Vernetzung, aber freie Carboxylgruppen, nativ bzw. durch Substitution, etwa von der Bernsteinsäure, Octenylbernsteinsäure. Diese führen durch Koordinationsverbindungen mit 2-wertigen und 3-wertigen Ionen (Ca, Mg, Al) bzw. mit Silicaten ebenfalls zu Produkten mit höherer Dichte und Festigkeit.

Der Substitutionsgrad der Stärkederivate sollte unter 0,2 liegen.

Generell kann man sagen, daß die Verkleisterungstemperatur zumindest um 2°C, insbesondere 5°C, durch die Derivatisierung gesenkt werden sollte um eine Wirkung zu sehen.

Bei der durch ionische Wechselwirkung modifizierten Stärke ist eine, ähnlich einer Vernetzung wirkende "Brückenfunktion" der im folgenden angeführten ionischen Gruppen anzunehmen.

Folgende Stoffe üben eine in dieser Hinsicht verstärkende Wirkung aus:

1. Aluminiumsulfat

Ein Einfluß Von Aluminiumionen konnte festgestellt werden im Konzentrationsbereich 0,05 - 0,15 g $Al_2\ (SO_4)_3$ pro 100 g Stärke.

Eine Analogie zur Leimung von Papier besteht nicht, da hier pH-Werte im Teig um den Neutralpunkt oder darüber vorliegen, Bedingungen bei denen Aluminiumhydroxid bereits ausfällt.

2. Alkalisilicate

Zusätze von Wasserglaslösungen im Bereich von 0,1-1,0% auf Stärke führen zu einer signifikanten Strukturvertestigung.

Dies trotz des hohen pH-Wertes von 7,5-9,0 im Teig, der normalerweise einen gegenteiligen Effekt auslöst.

3. Dicalciumphosphat, Calciumsilicat

Dicalciumphosphat und Calciumsilicat führen ebenfalls zu einer Strukturverfestigung bei Zugabe von 0,1 - 2,0% auf Stärke. Der pH-Wert des Teiges wird durch die wenig löslichen Salze nur geringfügig beeinflußt.

Andere Phosphate wie Monocalciumphosphat, Tricalciumphosphat, oder Pyrophosphate sowie andere Calciumsalze zeigen diesen zusätzlichen Effekt nicht.

Beispiel 1:

Herstellung von Tassen;

235x175x14 mm-Zugabe von Bernsteinsäureesterderivat von Kartoffelstärke

| Komponente/Rezept Nr. | 1 | 2 | 3 |
|---|---|---|---|
| Stärke (1) | 100 | 80 | 50 |
| Wasser | 100 | 100 | 100 |
| Stärkederivat (4) | - | 20 | 50 |
| Verdickungsmittel (2) | 0,5 | 0,5 | 0,5 |
| Trennmittel (3) | 2 | 2 | 2 |
| Viskosität, mPas, 24°C | 1400 | 1500 | 3100 |
| Backzeit, sek. | 155 | 160 | 190 |
| Backtemperatur, °C | 190 | 190 | 190 |
| Gewicht, g | 16,1 | 21,4 | 22,0 |
| Gewicht, % | 100 | 133 | 137 |
| pH-Wert 7,4; Konditionierung 70 % r.F., 27°C, 24 Stunden. | | | |

(1) Kartoffelstärke;
(2) Guar;
(3) Magnesiumstearat;
(4) Bernsteinsäureester auf Kartoffel stärke, 4 % Substitution

Druckfestigkeitsprüfung: Eine Prüfung der zur Kompression um 30 % erforderlichen maximalen Kraft nach einer Relativmethode ergibt folgende Meßwerte. Zahl der Proben pro Ansatz: 10

| Rezept Nr. | Gewicht g | Maximale Kraft | | | |
|---|---|---|---|---|---|
| | | N | % | s(1) | s, % |
| 1 | 16,1 | 95 | 100 | 31 | 33 |
| 2 | 21,4 | 337 | 355 | 45 | 13 |
| 3 | 22,0 | 468 | 493 | 51 | 11 |

(1) Standardabweichung in N, n = 10 (n = 9 für Nr. 3)

Bei einer Biegeprüfung zeigt sich keine signifikante Differenz in der Bruchkraft.

Beispiel 2:

Herstellung von Ampullenbehälter 80x65x13mm; Zugabe von Stärkeetherderivat mit Phosphatvernetzung

| Komponente/Rezept Nr. | 4 | 5 | 6 | 7 |
|---|---|---|---|---|
| Stärke (1) | 100 | 90 | 70 | - |
| Wasser | 100 | 100 | 100 | 100 |
| Stärkederivat (4) | - | 10 | 30 | 100 |
| Verdickungsmittel (2) | 0,5 | 0,5 | 0,5 | 0,5 |
| Trennmittel (3) | 2 | 2 | 2 | 2 |
| Backzeit, sek. | 32 | 33 | 36 | 44 |
| Backtemperatur, °C | 185 | 185 | 185 | 185 |
| Gewicht, g | 1,78 | 1,85 | 2,00 | 2,88 |
| Gewicht, % | 100 | 104 | 112 | 162 |
| Konditionierung 72 % r.F., 26 °C, 24 Stunden. | | | | |

(1) Kartoffelstärke;
(2) Guar;
(3) Magnesiumstearat;
(4) Hydroxypropylether, vernetzt

Beispiel 3a:

Rechteckiger Becher 110 x 120 x 48 mm; Zugabe von Alkalisilicaten

| Komponente/Rezept Nr. | 8 | 9 | 10 | 11 | 12 | 13 |
|---|---|---|---|---|---|---|
| Stärke (1) | 100 | 100 | 100 | 100 | 100 | 100 |
| Wasser | 120 | 120 | 120 | 120 | 120 | 120 |
| Faserstoff (4) | 10 | 10 | 10 | 10 | 10 | 10 |
| Verdickungsmittel (2) | 0,5 | 0,5 | 0,5 | 0,5 | 0,5 | 0,5 |
| Trennmittel (3) | 2 | 2 | 2 | 2 | 2 | 2 |
| Natronwasserglas | - | 0,3 | 0,5 | 0,7 | 1 | 2 |
| Viskosität, mPas, 22 °C | 1500 | 1400 | 1300 | 1300 | 1200 | - |
| pH-Wert | 7,6 | 8,9 | 9,0 | 9,4 | 9,5 | >10 |
| Backzeit, sek. | 90 | 90 | 90 | 90 | 90 | 90 |
| Backtemperatur, °C | 200 | 200 | 200 | 200 | 200 | 200 |
| Gewicht, g, ohne Kond. | 8,5 | 9,0 | 10,3 | 12,1 | 14 | 16 |
| Gewicht, % | 100 | 106 | 121 | 142 | (165),(5) | (188),(5) |
| Konditionierung 70 % r.F., 27°C, 24 Stunden. | | | | | | |

(1) Kartoffelstärke;
(2) Guar;
(3) Magnesiumstearat;
(4) Cellulose;
(5) teilweise Rißbildung

Beispiel 3b:

Rechteckiger Becher 110 x 120 x 48 mm; Zugabe von Alkalisilicaten

| Komponente/Rezept Nr. | 14 | 15 | 15a | 16 |
|---|---|---|---|---|
| Stärke (1) | 100 | 100 | 100 | 100 |
| Wasser | 130 | 130 | 130 | 130 |
| Faserstoff (4) | 10 | 10 | 10 | 10 |
| Verdickungsmittel (2) | 0,3 | 0,3 | 0,3 | 0,3 |
| Trennmittel (3) | 2 | 2 | 2 | 2 |
| Kaliwasserglas | - | 0,5 | 1 | 0,5 (5) |
| Calciumsilicat | 5 | - | - | |
| Viskosität, mPas, 22 °C | 1300 | 1200 | 1400 | 1300 |
| pH-Wert | 7,6 | 9,1 | 9,7 | 7,5 |
| Backzeit, sek. | 90 | 90 | 90 | 90 |
| Backtemperatur, °C | 200 | 200 | 200 | 200 |
| Gewicht, g, ohne Kond. | 9,5 | 9,7 | 11,0 | 8,7 |
| Konditionierung 70 % r.F., 27°C, 24 Stunden. | | | | |

(1) Kartoffelstärke;
(2) Guar;
(3) Magnesiumstearat;
(4) Cellulose;
(5) mit 12 ml 0,1 N Salzsäure neutralisiert

Beispiel 4:

Herstellen einer flachen Tasse 235x175x12 mm, Wandstärke 4 mm mit unterschiedlichen Zusätzen derivatisierter Kartoffelstärke

| Komponente/Rezept Nr. | 17 | 18 | 19 | 20 |
|---|---|---|---|---|
| Stärke (1) | 100 | 90 | 80 | 70 |
| Wasser | 100 | 100 | 100 | 100 |
| Stärkederivat (4) | - | 10 | 20 | 30 |
| Verdickungsmittel (2) | 0,5 | 0,5 | 0,5 | 0,5 |
| Trennmittel (3) | 2 | 2 | 2 | 2 |
| Viskosität, mPas, 22 °C | 2000 | 2200 | 2000 | 2000 |
| Backzeit, sek. | 150 | 155 | 160 | 160 |
| Backtemperatur, °C | 190 | 190 | 190 | 190 |
| Gewicht, g, ohne Kond. | 15,3 | 16,3 | 17,3 | 18,8 |
| Gewicht, % | 100 | 107 | 113 | 123 |
| Konditionierung 72 % r.F., 25 °C, 24 Stunden | | | | |

(1) Kartoffelstärke;
(2) Guar;
(3) Magnesiumstearat;
(4) Kartoffelstärke, hydroxypropyliert, vernetzt

Beispiel 5:

Herstellen eines korbartigen Behälters 115x80x38 mm, mit unterschiedlichem Zusatz hydroxypropylierter Kartoffelstärke

| Komponente/Rezept Nr. | 21 | 22 | 23 | 24 |
|---|---|---|---|---|
| Stärke (1) | 100 | 80 | 50 | - |
| Wasser | 100 | 100 | 100 | 100 |
| Stärkederivat (4) | - | 20 | 50 | 100 |
| Verdickungsmittel (2) | 0,5 | 0,5 | 0,5 | 0,5 |
| Trennmittel (3) | 2 | 2 | 2 | 2 |
| Viskosität, mPas, 22°C | 1450 | 1800 | 3300 | >10000 |
| Backzeit, sek. | 60 | 55 | 55 | 55 |
| Backtemperatur, °C | 185 | 185 | 185 | 185 |
| Gewicht, g | 4,3 | 4,6 | 4,9 | 5,3 |
| Gewicht, % | 100 | 108 | 113 | 123 |
| Konditionierung 72 % r.F., 25 °C, 24 Stunden | | | | |

(1) Kartoffelstärke;
(2) Guar;
(3) Magnesiumstearat;
(4) propoxylierte Kartoffelstärke

Druckfestigkeitzprüfung: Eine Prüfung der zur Kompression um 30 % erforderlichen maximalen Kraft nach einer Relativmethode ergibt folgende Meßwerte. Zahl der Proben pro Ansatz: 10

| Rezept Nr. | Gewicht der Schale, g | Maximale Kraft | | | |
|---|---|---|---|---|---|
| | | N | % | s(1) | s, % |
| 21 | 4,3 | 128 | 100 | 17 | 13 |
| 22 | 4,6 | 155 | 121 | 17 | 11 |
| 23 | 4,9 | 160 | 125 | 22 | 14 |
| 24 | 5,3 | 173 | 135 | 35 | 20 |

(1) Standardabweichung in N, n = 12

Beispiel 6:

Herstellen eines rechteckigen, konischen Behälters 145x90x50 mm; mit unterschiedlichen Zusätzen eines Octenylsuccinatesters

| Komponente/Rezept Nr. | 25 | 26 | 27 | 28 |
|---|---|---|---|---|
| Stärke (1) | 100 | 90 | 80 | 60 |
| Wasser | 110 | 110 | 110 | 110 |
| Stärkederivat (4) | 0 | 10 | 20 | 40 |
| Verdickungsmittel (2) | 0,5 | 0,5 | 0,5 | 0,5 |
| Trennmittel (3) | 2 | 2 | 2 | 2 |
| Viskosität, mPas, 22 °C | 1500 | 1480 | 1520 | 1700 |
| pH-Wert | 8,0 | 7,7 | 7,4 | 7,0 |
| Backzeit, sek. | 70 | 68 | 60 | 58 |
| Backtemperatur, °C | 190 | 190 | 190 | 190 |
| Gewicht, g | 6,2 | 6,8 | 7,5 | 8,8 |
| Konditionierung 70 % r.F., 10 °C, 10 Stunden | | | | |

(1) Kartoffelstärke;
(2) Guar;
(3) Magnesiumstearat;
(4) Maisstärke, Octenylsuccinat

Druckfestigkeitzprüfung: Eine Prüfung der zur Kompression um 30 % erforderlichen maximalen Kraft nach einer Relativmethode ergibt folgende Meßwerte. Zahl der Proben pro Ansatz: 10

| Rezept Nr. | Gewicht der Schale, g | Maximale Kraft | | | |
|---|---|---|---|---|---|
| | | N | % | s(1) | s, % |
| 25 | 6,2 | 74 | 100 | 16 | 22 |
| 26 | 6,8 | 114 | 154 | 16 | 14 |
| 27 | 7,5 | 156 | 211 | 16 | 10 |
| 28 | 8,7 | 219 | 296 | 40 | 18 |

(1) Standardabweichung in N, n = 10

Beispiel 7:

Herstellen eines rechteckigen, konischen Behälters 145 x 90 x 50 mm

| Komponente/Rezept Nr. | 29 | 30 | 31 | 32 |
|---|---|---|---|---|
| Stärke (1) | 100 | 75 | 75 | 75 |
| Wasser | 110 | 110 | 110 | 110 |
| Stärkederivat (4) | - | 25 | - | - |
| Stärkederivat (5) | - | - | 25 | - |
| Stärkederivat (6) | - | - | - | 25 |
| Verdickungsmittel (2) | 0,5 | 0,5 | 0,5 | 0,5 |
| Trennmittel (3) | 2 | 2 | 2 | 2 |
| Viskosität, mPas, 25 °C | 1750 | 1250 | 1800 | 3500 |
| Backzeit, sek. | 75 | 67 | 63 | 63 |
| Backtemperatur, °C | 190 | 190 | 190 | 190 |
| Gewicht, g | 6,6 | 7,3 | 8,3 | 6,9 |
| Konditionierung 75 % r.F., 12 Stunden, Raumtemperatur. | | | | |

(1) Kartoffelstärke;
(2) Guar;
(3) Magnesiumstearat;
(4) Maisstärke, Hydroxypropylether;
(5) Maisstärke, Octenylsuccinat;
(6) Maisstärke, kationisch, hydrophob

Beispiel 8:

Herstellung runder Teller, Durchmesser 155 mm, Höhe 12 mm

| Komponente/Rezept Nr. | 33 | 34 | 35 |
|---|---|---|---|
| Stärke (1) | 100 | - | - |
| Wasser | 100 | 100 | 100 |
| Stärkederivat (4) | - | 100 | - |
| Stärkederivat (5) | - | - | 100 |
| Verdickungsmittel (2) | 0,5 | 0,5 | 0,5 |
| Trennmittel (3) | 2,0 | 2,0 | 2,0 |
| Backzeit, sek. | 60 | 70 | 75 |
| Gewicht, g ohne Konditionieren | 6,0 | 9,5 | 10,5 |
| Konditionierung 70 % r.F., 27°C, 24 Stunden. | | | |

(1) Kartoffelstärke;
(2) Guar;
(3) Magnesiumstearat;
(4) Maisstärke, kationisch, hydrophob;
(5) Maisstärke, Octenylsuccinat

Beispiel 9:

Herstellen von Verpackungsschalen 130 x 105 x 30 mm

| Komponente/Rezept Nr. | 36 | 37 | 38 | 39 |
|---|---|---|---|---|
| Stärke (1) | 100 | - | - | 100 |
| Wasser | 100 | 100 | 110 | 100 |
| Stärkederivat (4) | - | - | 100 | - |
| Stärkederivat (5) | - | 100 | - | - |
| Stärkederivat (6) | - | - | - | 10 |
| Verdickungsmittel (2) | 0,5 | 0,5 | 0,5 | - |
| Trennmittel (3) | 2 | 2 | 3 | 2 |
| Backzeit, sek. | 90 | 90 | 115 | 90 |
| Gewicht, g ohne Konditionierung | 8,9 | 13,0 | 18,0(7) | 12,0 |

(1) Kartoffelstärke;
(2) Guar;
(3) Magnesiumstearat;
(4) Reismehl;
(5) kationische Maisstärke, DS=0,04;
(6) Maisstärke, propoxyliert, vorverkleistert;
(7) vereinzelt teilweise Rißbildung

Beispiel 10:

Herstellung eines Trays 135x220x19 mm unter Zusatz verschiedener Konzentrationen an Al-Ionen

| Komponente/Rezept Nr. | 40 | 41 | 42 | 43 |
|---|---|---|---|---|
| Stärke (1) | 100 | 100 | 100 | 100 |
| Wasser | 100 | 100 | 100 | 100 |
| Verdickungsmittel (2) | 0,5 | 0,5 | 0,5 | 0,5 |
| Trennmittel (3) | 2 | 2 | 2 | 2 |
| Aluminumsulfat . $xH_2O$ | - | 0,11 | 0,22 | 0,44 |
| 55 % $Al_2 (SO_4)_3$ | | | | |
| dies entspricht $Al^{3+}$ | 0 | 0,01 | 0,02 | 0,04 |
| Teigvolumen, ml | 30 | 32 | 34 | 37 |
| Teigtemperatur, °C | 25 | 25 | 25 | 25 |
| Viskosität, mPas, ± 100 mPas | 1500 | 1500 | 1500 | 1500 |
| Backzeit, sek., ± 5 sek. | 145 | 145 | 145 | 145 |
| Backtemperatur, °C | 190 | 190 | 190 | 190 |
| Gewicht, g (Durchschnittswert) | 15,2 | 16,2 | 17,4 | 18,8 |
| Gewicht, Relativ-% | 100 | 107 | 114 | 124 |
| Konditionierung 72 % r.F., 12 Stunden, Raumtemperatur | | | | |

(1) Kartoffelstärke;
(2) Guar;
(3) Magnesiumstearat

Beispiel 11:

Herstellung eines rechteckigen, konischen Behälters 145 x 90 x 50 mm

| Komponente/Rezept Nr. | 44 | 45 | 46 | 47 | 48 |
|---|---|---|---|---|---|
| Stärke (1) | 100 | 100 | 90 | 90 | 90 |
| Stärke (4) | - | - | - | - | 10 |
| Stärkederivat (5) | - | - | 10 | 10 | - |
| Wasser | 110 | 110 | 110 | 110 | 110 |
| Verdickungsmittel (2) | 0,5 | 0,5 | 0,5 | 0,5 | 0,5 |
| Trennmittel (3) | 2 | 2 | 2 | 2 | 2 |
| Aluminiumsulfat . $xH_2O$ | - | 0,15 | - | 0,15 | - |
| 55 % $Al_2(SO_4)_3$ | | | | | |
| entspricht $Al^{3+}$ | - | 0,013 | - | 0,013 | - |
| Viskosität, mPas, 22 °C | 800 | 800 | 850 | 1000 | 600 |
| pH-Wert | 7,3 | 6,7 | 7,1 | 6,6 | 7,3 |
| Teigvolumen, ml | 15 | 15 | 17 | 17 | 16 |
| Backzeit, sek. | 70 | 74 | 70 | 63 | 70 |
| Gewicht, g (Durchschnitt) | 6,83 | 7,17 | 7,31 | 7,38 | 6,92 |
| Gewicht, Relativ-% | 100 | 105 | 107 | 108 | 101 |
| Backtemperatur 180/185 °C, Konditionierung 72 % r.F., 6 Stunden, 26°C. | | | | | |

(1) Kartoffelstärke;
(2) Guar;
(3) Magnesiumstearat;
(4) Maisstärke;
(5) Maisstärkederivat, Octenylsuccinat

Beispiel 12:

Herstellung einer Verpackungsschale 130 x 105 x 30 mm

| Komponente/Rezept Nr. | 49 | 50 | 51 | 52 | 53 |
|---|---|---|---|---|---|
| Stärke (1) | 100 | 100 | 100 | 100 | 100 |
| Wasser | 110 | 110 | 110 | 110 | 110 |
| Verdickungsmittel (2) | 0,5 | 0,5 | 0,5 | 0,5 | 0,25 |
| Trennmittel (3) | 2 | 2 | 2 | 2 | 2 |
| Aluminiumsulfat, wasserfrei | - | 0,05 | 0,1 | 0,15 | 0,15 |
| Viskosität, mPas, 22 °C | 1400 | 1700 | 1800 | 1900 | 900 |
| pH-Wert | 7,7 | 7,1 | 6,7 | 6,5 | 6,3 |
| Backzeit, sek. | 65 | 65 | 70 | 70 | 73 |
| Backtemperatur, °C | 180 | 180 | 180 | 180 | 180 |
| Gewicht, g (Durchschnitt) | 8,3 | 8,7 | 9,6 | 9,0 | 9,8 |
| Gewicht, Relativ-% | 100 | 105 | 116 | 118 | 118 |
| Konditionierung 72 % r.F., 3 Stunden, 29°C. | | | | | |

(1) Kartoffelstärke;
(2) Guar;
(3) Magnesiumstearat

Druckfestigkeitsprüfung: Eine Prüfung der zur Kompression um 30 % erforderlichen maximalen Kraft nach einer Relativmethode ergibt folgende Meßwerte. Zahl der Proben pro Ansatz: 10

| Rezept Nr. | Probengewicht | | Al-Sulfat g/100 g Stärke | Maximale Kraft | |
|---|---|---|---|---|---|
| | g | % | | N | % |
| 49 | 8,25 | 100 | 0 | 98 | 100 |
| 50 | 8,70 | 105 | 0,05 | 118 | 120 |
| 51 | 9,62 | 117 | 0,1 | 133 | 136 |
| 52 | 9,70 | 118 | 0,15 | 153 | 156 |

(1) Standardabweichung in N, n = 10

Beispiel 13:

Herstellung einer Verpackungsschale 130 x 105 x 30 mm (wie Beispiel 12)

| Komponente/Rezept Nr. | 54 | 55 | 56 |
|---|---|---|---|
| Stärke (1) | 100 | 100 | 100 |
| Wasser | 100 | 100 | 100 |
| Verdickungsmittel (2) | 0,5 | 0,5 | 0,5 |
| Trennmittel (3) | 2 | 2 | 2 |
| Calciumcarbonat | - | 2 | - |
| Calciumhydrogenphosphat | - | - | 1 |
| Viskosität, mPas, 22 °C | 1500 | 1900 | 1300 |
| pH-Wert | 7,6 | 8,9 | 7,3 |
| Backzeit, sek. | 65 | 65 | 70 |
| Backtemperatur, Konditionierung wie Beispiel 12 | | | |
| Gewicht, g | 9,03 | 8,61 | 9,57 |
| Gewicht, Relativ-% | 100 | 95 | 106 |
| Maximale Kraft, N (4) | 11,8 | 12,3 | 14,2 |
| Maximale Kraft, Relativ-% | 100 | 104 | 120 |

(1) Kartoffelstärke;
(2) Guar;
(3) Magnesiumstearat;
(4) an gestanzter Scheibe, 30 mm Durchmesser gemessen

Beispiel 14:

Herstellung einer Sortiereinlage 195 x 65 x 16 mm

| Komponente/Rezept Nr. | 57 | 58 | 59 | 60 |
|---|---|---|---|---|
| Stärke (1) | 100 | 100 | 100 | 100 |
| Wasser | 120 | 120 | 120 | 120 |
| Verdickungsmittel (2) | 0,3 | 0,3 | 0,3 | 0,3 |
| Trennmittel (3) | 2 | 2 | 2 | 2 |
| Caiciumhydrogenphosphat | - | 1,2 | - | - |
| Calciumphosphat | - | - | 1,25 | - |
| Calciumdihydrogenphosphat | - | - | - | 0,9 |
| pH-Wert | 7,4 | 7,1 | 7,0 | 6,6 |
| Backzeit, sek. | 28-30 | 28-30 | 28-30 | 28-30 |
| Backtemperatur, Konditionierung wie Beispiel 13 | | | | |
| Gewicht, g | 5,01 | 5,55 | 5,45 | 5,37 |
| Gewicht, Relativ-% | 100 | 111 | 109 | 107 |

(1) Kartoffelstärke;
(2) Guar;
(3) Magnesiumstearat;

Beispiel 15:

Herstellen von Tassen 235 x 175 x 14 mm, Zugabe von Stärkeesterderivat

| Komponente/Rezept Nr. | 61 | 62 | 63 |
|---|---|---|---|
| Stärke (1) | 100 | 50 | 0 |
| Wasser | 100 | 105 | 110 |
| Stärkederivat (4) | - | 50 | 100 |
| Verdickungsmittel (2) | 0,5 | 0,5 | 0,5 |
| Trennmittel (3) | 2 | 2 | 2 |
| Backzeit, sek. | 170 | 180 | - (5) |
| Backtemperatur, °C | 190 | 190 | 190 |
| pH-Wert 7,2; Konditionierung 73 % r.F., 24 °C; 24 Stunden | | | |

(1) Kartoffelstärke;
(2) Guar;
(3) Magnesiumstearat;
(4) acetylierte Kartoffelstärke, E1422;
(5) nicht mehr gut ausgeformt

## Patentansprüche

1. Verfahren zur Herstellung von verrottbaren, dünnwandigen Formkörpern, wie z.B. Bechern, Tellern, Fast-Food-Verpackungen, Trays, ebenen Blättern u.dgl., durch Aufbringen einer Backmasse auf Stärkebasis auf den unteren Formteil einer mehrteiligen, vorzugsweise zweiteiligen Form, wobei man, um ein zähes, festes, hohe mechanische Stabilität aufweisendes Produkt zu erhalten

 1) eine aus folgenden Ingredienzien bereitete, im wesentlichen fettfreie Backmasse einsetzt:

  a) 42,0 bis 60,0 Gew.-% vorzugsweise 45,0 bis 56,0 Gew.-% Wasser;
  b) 36,0 bis 56,5 Gew.-%, vorzugsweise 38,0 bis 52,0 Gew.-% eines Stärkeproduktes;
  c) als Trennmittel 0,04 bis 11 Gew.-%, vorzugsweise 0,2 bis 4,5 Gew.-% einer oder mehrerer mittel- oder langkettiger, gegebenenfalls substituierter Fettsäuren und/oder deren Salze und/oder deren Säurederivate, z.B. Säureamide - gegebenenfalls können neben diesen Verbindungen oder als teilweiser, in Einzelfällen auch als vollständiger Ersatz derselben 0,5 bis 6,5 Gew.-%, vorzugsweise 0,1 bis 4,2 Gew.-% Polymethylhydrogensiloxane eingesetzt werden, wobei im Falle des Einsatzes beider Verbindungsgruppen bei hohen Konzentrationen an Fettsäuren bzw. deren Verbindungen die Konzentration an Polymethylhydrogensiloxanen in der Regel 3 Gew.-% nicht überschreiten soll und
  gegebenenfalls Verdickungsmittel, wie Quellstärke, vorverkleisterte Stärke od. Backabfall, und/oder Guar-Mehl, Pektin, Johannisbrotkernmehl, Carboxymethylcellulose und/oder Gummi arabicum;
  Faserstoffe, wie cellulosereiche Rohstoffe, pflanzliche Rohstoffe, Fasern aus Kunststoff, Glas, Metall und Kohlenstoff;
  nicht fasenförmige Füllstoffe, wie Calciumcarbonat, Kohle, Talkum, Titandioxid, Kieselgel, Aluminiumoxid, Schellack, Sojaeiweiß, pulv., Weizenkleber, pulv. Hühnereiweiß, pulv., Casen, pulv. und Caseinat, pulv.;
  Farbstoffe;
  Konservierungsmittel, und
  Antioxidantien;

 2) die die Form ausfüllende Backmasse ausbackt, und
 3) das erhaltene Produkt durch Konditionieren auf einen Feuchtigkeitsgehalt von 6 Gew.-% bis 22 Gew.-% einstellt,
 dadurch gekennzeichnet, daß als Stärkeprodukt

  a) 0,0 bis 54,5 Gew.-%, vorzugsweise 10 bis 50,0 Gew.-% einer Stärke oder eines Gemisches verschiedener Stärken und/oder Mehl oder Mehlgemische und

  b) 2,0 bis 56,5 Gew.-%, vorzugsweise 2,0 bis 28,0 Gew.-% mindestens einer modifizierten Stärke ausgewählt aus der Gruppe, bestehend aus: mit organischen Säuren oder mit Phosphorsäure veresterte Stärke, veretherte Stärke, vernetzte Stärke und durch ionische Wechselwirkung modifizierbare Stärke eingesetzt wird.

2. Verfahren nach Anspruch 1, dadurch gekennzeichnet, daß als veresterte Stärke eine Stärke eingesetzt wird, die mit Essigsäure, Bernsteinsäure oder alkenylsubstituierter Bernsteinsäure verestert ist.

3. Verfahren nach Anspruch 1, dadurch gekennzeichnet, daß als veresterte Stärke eine Stärke eingesetzt wird, die mit Phosphorsäure verestert ist.

4. Verfahren nach Anspruch 1, dadurch gekennzeichnet, daß als veretherte Stärke eine Stärke eingesetzt wird, die mit Ethylenoxid oder Propylenoxid verethert ist.

5. Verfahren nach Anspruch 1, dadurch gekennzeichnet, daß als vernetzte Stärke eine Stärke eingesetzt wird, die mit Natriummetaphosphat oder Phosphoroxychlorid, mit einer Dicarbonsäure, z.B. Adipinsäure oder mit Epichlorhydrin bzw. Acrolein vernetzt ist.

6. Verfahren nach Anspruch 1, dadurch gekennzeichnet, daß zur Erzielung einer ionischen Wechselwirkung der Stärke Aluminiumsulfat, Alkalisilikate, Dicalciumphosphat oder Calciumsilikat zugesetzt wird.

7. Verfahren nach Anspruch 3, 4 oder 5, dadurch gekennzeichnet, daß der Substitutionsgrad der Stärkederivate unter

0,2 liegt.

## Claims

1. A process for manufacturing compostible thin-walled molded articles such as cups, plates, fast-food packagings, trays, flat sheets and the like, by applying a starch-based baking composition on the lower part of a multipart, preferably bipartite mold, to obtain a tough, durable article of high mechanical stability

    1) by using an essentially fat-free baking composition that is composed of

        a) 42,0 - 60,0 % by weight, preferably 45,0 - 56,0 % by weight, water,
        b) 36,0 - 56,5 % by weight, preferably 38,0 - 52,0 % by weight, of a starch product
        c) 0,04 - 11 % by weight, preferably 0,2 - 4,5 % by weight, of one or more medium- or long-chain, optionally substituted fatty acids and/or salts thereof and/or acid derivatives thereof, e.g. acid amides, as a release agent - optionally using 0,5 - 6,5 % by weight, preferably 0,1 - 4,2 % by weight, of polymethylhydrogen siloxanes in combination with said compounds, or as a partial or occasionally as a complete substitute thereof, such that, when both groups of compounds are used and the concentrations of fatty acids and derivatives thereof are high, normally the concentration of polymethylhydrogen siloxanes is best not allowed to exceed 3 % by weight,
        and optionally thickening agents such as swell-starch, pregelatinized starch or baking wastes, and/or guar gum, pectin, carob gum, carboxymethylcellulose and/or gum arabic;
        fibrous materials such as high-cellulose raw materials, vegetable raw materials, fibers of plastics, glass, metal and carbon;
        non-fibrous fillers such as calcium carbonate, carbon, talc, titanium dioxide, silica gel, alumina, shellac, soybean protein powder, wheat gluten powder, chicken egg protein powder, casein powder, and caseinate powder; colorants;
        preservatives and
        antioxidants;

    2) by baking the baking composition filling the mold, and
    3) by conditioning the resulting product to establish a moisture content of 6-22 % by weight,
    characterized in that as a starch product used is

        a) 0,0 - 54,5 % by weight, preferably 10 - 50,0 % by weight, of a starch or a mixture of various starches and/or flour or flour mixtures and
        b) 2,0 - 56,5 % by weight, preferably 2,0 - 28,0 % by weight, of at least one modified starch selected from the group comprising starch esterified with organic acids or phosphoric acid, etherified starch, cross-linked starch and starch capable of being modified by ionic interaction.

2. The process according to claim 1, characterized in that a starch esterified with acetic acid, succinic acid or alkenyl-substituted succinic acid is used as esterified starch.

3. The process according to claim 1, characterized in that a starch esterified with phosphoric acid is used as esterified starch.

4. The process according to claim 1, characterized in that a starch etherified with ethylene oxide or propylene oxide is used as etherified starch.

5. The process according to claim 1, characterized in that a starch cross-linked with sodium metaphosphate or phosphorus oxychloride, with a dicarboxylic acid, for example adipic acid, or with epichlorohydrin or acrolein is used as cross-linked starch.

6. The process according to claim 1, characterized in that to obtain ionic interaction of starch, aluminium sulfate, alkali silicates, dicalcium phosphate or calcium silicate is added.

7. The process according to claims 3, 4 or 5, characterized in that the degree of substitution of the starch derivatives is less than 0,2.

## Revendications

1. Procédé de fabrication d'articles moulés à parois minces pourrissables, comme, par exemple, des tasses, des assiettes, des emballages pour aliments pour restauration rapide, de plateaux, de feuilles planes, et analogues, par l'application d'une masse à cuire à base d'amidon sur la pièce de moulage inférieure d'un moule en plusieurs pièces, de préférence en deux pièces, conformément auquel on utilise, en vue d'obtenir un produit tenace, solide, présentant une stabilité mécanique élevée,

    1) une masse à cuire essentiellement dépourvue de graisse et préparée à partir des ingrédients qui suivent :

        a) 42,0 à 60,0% en poids, de préférence 45,0 à 56,0% en poids, d'eau;
        b) 36,0 à 56,5% en poids, de préférence, 38,0 à 52,0% en poids, d'un produit à base d'amidon;
        c) à titre d'agent de démoulage, de 0,04 à 11% en poids, de préférence, de 0,2 à 4,5% en poids, d'un ou plusieurs acides gras à chaîne moyenne ou à chaîne longue, éventuellement substitués et/ou de leurs sels et/ou de leurs dérivés d'acides, par exemple, des amides d'acides, - éventuellement, on peut utiliser, en plus de ces composés, ou à titre de produits de remplacement partiel, dans quelques cas individuels également de produits de remplacement total, de ceux-ci, de 0,5 à 6,5% en poids, de préférence, de 0,1 à 4,2% en poids, de polyméthylhydrogénosiloxane, où dans le cas de la mise en oeuvre des deux groupes de composés et à des concentrations élevées en acides gras ou de leurs composés, la concentration en polyméthylhydrogénosiloxanes ne doit, en règle générale, pas dépasser 3% en poids, et
        éventuellement des agents épaississants, comme de l'amidon gonflant, de l'amidon prégélatinisé ou des résidus de cuisson et/ou de la farine de gomme guar, de la pectine, de la farine de grains de caroube, de la carboxyméthylcellulose et/ou de la gomme arabique;
        des fibres, comme des matières premières riches en cellulose, des matières premières végétales, des fibres en matière plastique, en verre, en métal et en carbone;
        des charges non fibreuses, comme le carbonate de calcium, le charbon, le talc, le dioxyde de titane, le gel de silice, l'oxyde d'aluminium, le shellack, des protéines de soja, des colles de blé pulvérulentes, des protéines de volaille pulvérulentes, de la caséine pulvérulente, et du caséinate pulvérulent;
        des colorants;
        des conservateurs, et
        des antioxydants;

    2) on cuit la masse à cuire qui remplit le moule, et
    3) on règle le produit obtenu à une teneur en humidité de 6% en poids à 22% en poids par conditionnement, caractérisé en ce que, on utilise, à titre produit à base d'amidon

        a) de 0,0 à 54,5% en poids, de préférence, de 10 à 50,0% en poids, d'un amidon ou d'un mélange de divers amidons et/ou de farine ou de mélanges de farine, et
        b) de 2,0 à 56,5% en poids, de préférence, de 2,0 à 28,0% en poids, d'au moins un amidon modifié choisi dans le groupe constitué par des amidons estérifiés avec des acides organiques ou avec l'acide phosphorique, des amidons éthérifiés, des amidons réticulés ou des amidons modifiés par échange ionique.

2. Procédé suivant la revendication 1, caractérisé en ce que, à titre d'amidon estérifié, on utilise un amidon qui a été estérifié avec l'acide acétique, l'acide succinique, ou l'acide succinique à substitution alcénylique.

3. Procédé suivant la revendication 1, caractérisé en ce que l'on utilise, à titre d'amidon estérifié, un amidon estérifié avec l'acide phosphorique.

4. Procédé suivant la revendication 1 caractérisé en ce que l'on utilise, à titre d'amidon éthérifié, un amidon éthérifié avec l'oxyde d'éthylène ou l'oxyde de propylène.

5. Procédé suivant la revendication 1, caractérisé en ce que l'on utilise, à titre d'amidon réticulé, un amidon réticulé avec du métaphosphate de sodium ou de l'oxychlorure de phosphore, avec un acide dicarboxylique, par exemple l'acide adipique ou avec l'épichlorhydrine ou l'acroléine.

6. Procédé suivant la revendication 1, caractérisé en ce qu'en vue de l'obtention d'un échange ionique de l'amidon, on ajoute du sulfate d'aluminium, des silicates de métaux alcalins, du phosphate dicalcique ou du silicate de calcium.

7. Procédé suivant l'une quelconque des revendications 3, 4 et 5, caractérisé en ce que le degré de substitution des dérivés de l'amidon est inférieur à 0,2.